# EUROPEAN PATENT SPECIFICATION

(11) **EP 3 378 774 B1**
(45) Date of publication and mention of the grant of the patent: **12.02.2020**
(21) Application number: 17161974.5
(22) Date of filing: 21.03.2017
(51) Int. Cl.: B64D 17/80, F16C 1/12

(54) **RELEASE LEVER FOR A PARACHUTE RESCUE SYSTEM**
AUSLÖSUNGSHEBEL FÜR EIN FALLSCHIRMRETTUNGSSYSTEM
LEVIER DE DÉGAGEMENT POUR UN SYSTÈME DE PARACHUTE DE SECOURS

(43) Date of publication of application: 26.09.2018
(73) Proprietor: FLARIS Spolka z ograniczona odpowiedzialnoscia, 58-560 Jelenia Gora (PL)
(72) Inventor: Ladzinski, Rafal, 58-560 Jelenia Gora (PL)
(74) Representative: Budzinski, Slawomir

(56) References cited:
- GB-A- 877 796
- GB-A- 1 220 827
- US-A- 5 409 187

## Description

The object of the invention is a release lever, for a parachute rescue system of a light aircraft, with a jet engine mounted on the aircraft fuselage.

Solutions of levers for parachute rescue systems are known which have a handle seated in the body. The body is mounted to the fuselage structure in the aircraft cabin. The end of the handle is connected to a tension member to the fuse of a dragging rocket. Pulling the handle out of the body via the tension member activates the fuse of the dragging rocket.

In the case of ultralight aircrafts, due to their low mass, it is possible to use the parachute to rescue the machine with the crew. The parachute is mounted to the aircraft and allows landing of the whole unit together with the crew, without having to leave the aircraft. The parachute is built over in the fuselage in a place intended therefor. Usually, it is packed into a bag made of a special material and protected from moisture and dust. In the case of aircrafts with a non-built-over cabin having a frame structure, the parachute for the aircraft is packed into a cylindrical container.

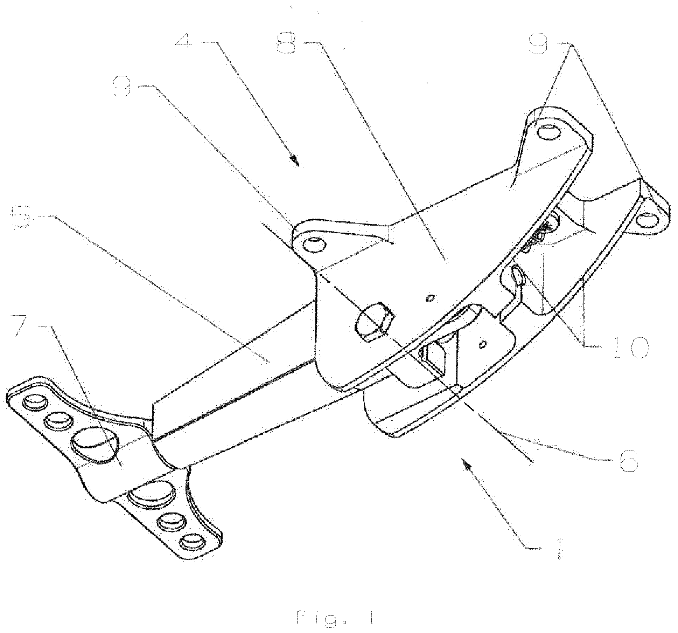

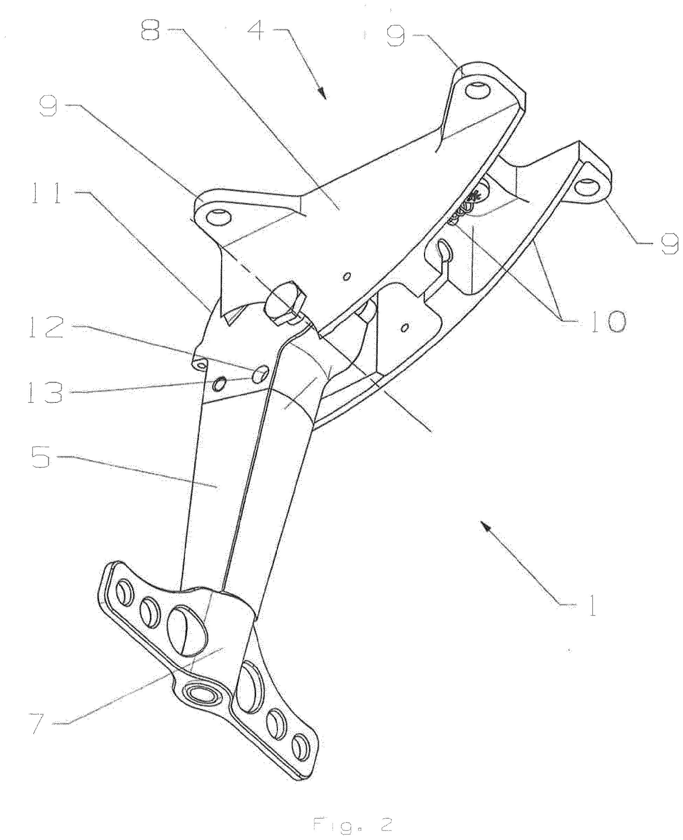

British patent specification GB 1220827 A discloses a control system for the brake parachute of an aircraft comprises a parachute mechanism having a pair of locks either one of which alone is capable of locking the mechanism in engagement with the parachute mushroom, a parachute deployment mechanism which on operation locks the first lock and also allows the parachute to deploy and a parachute deployment sensing device which on sensing deployment of the parachute unlocks the second lock. As shown, the release mechanism 1 comprises a pair of pivoted jaws 39 which are engageable with a "mushroom" 2, to an eye 4 of which is attached line 5 of a braking parachute pack 6. In the normal flight position the jaws 38, 39 are retained in engagement with the "mushroom" by a linkage which includes a pivoted lever 36, one arm 35 of which is retained in the position shown in Fig. 2 by a non-flat portion of a shaft 33 constituting the pivot of a control lever 23. In the dotted line position of the lever 23 the lever is held in its locking position against a spring-loaded plunger 71, by the shaft 33, and a lever 21 is pivoted to a position in which a pivot shaft 32 having a flat thereon is clear of an arm 34 of the lever 36. When the parachute is to be deployed, a lever 9, Fig. 1 is moved in the direction shown, whereby the shaft 32 is moved to the position shown in Fig. 2 and thereafter a rod 16 operates a deployment mechanism 17 which releases a tail cone 8 and permits deployment of the parachute. The deployment is sensed by a spring-loaded rod 25 pivoted to lever 23, which is then rotated by the rod 25 to release the shaft 33 from engagement with the arm of lever 36, the jaws 38, 39 being then maintained in engagement with the "mushroom" by engagement of the arm 34 with shaft 32. When the parachute is to be released, the lever 9 is moved to its original position in which the lever 21 pivots to rotate the shaft 32 and release the lever 36 to the Fig. 2 full-line position. The lever 23 is set to its locking position prior to flight by means of a cocking lever 66.

US specification US5409187A discloses an invention providing a compressed gas rocket apparatus for deployment of emergency parachutes, rescue lines and similar payloads. A pressurized vessel is equipped with a stopping or sealing mechanism which, when removed or punctured, causes the pressure vessel to be launched. A drag line connected to the vessel pulls the payload away from the launch point, in the direction of the pressure vessel travel.

Known release levers for parachute rescue systems operate in a single step. Their task is solely to launch a rocket which is designed to raise the parachute canopy over the aircraft. They are suitable for use in the case of aircrafts with a non-built-over cabin having a frame structure. In the built-over aircrafts, launching the rocket causes extraction of a special piece of the aircraft plating.

The aim of the invention is to develop such a structure of the release lever for parachute rescue systems which will operate in two steps, i.e. will allow opening of the lid of the parachute container, and then activation of the fuse of the rescue rocket.

The release lever, according to the invention, for the parachute rescue system of a light aircraft, with a jet engine mounted on the aircraft fuselage, comprising a body and a handle arranged in the body and configured to be mounted to the fuselage structure in the aircraft cabin, is characterised in that the body consists of a console and a rotatable lever rotatably mounted in the console and configured to be rotated from a resting position to an operating position, wherein the console is mountable to the aircraft fuselage structure, and the handle is seated inside the rotatable lever and protrudes beyond the rotatable lever, wherein the handle is provided with a locking mechanism which prevents pulling the handle out of the rotatable lever before it is rotated from the resting position to the operating position, and wherein in the operating position, the locking mechanism is configured to allow the operator to pull the handle out of the rotatable lever.

It is preferable if the console has a base with fixing components and walls perpendicular to the base, and the rotatable lever is provided with a guide in a form of a circular sector, the guide being located at the end of the rotatable lever, and the end being located between the console walls, wherein there is a fixing seat on the edge of the guide, and the handle has a through hole extending along its axis, terminated with a seat at the end of the handle, the seat protruding beyond the rotatable lever.

It is also preferable if the locking mechanism which prevents pulling the handle out of the rotatable lever before it is rotated from the resting position to the operating position, contains balls arranged in seats located in the side walls of the rotatable lever and of the handle, the balls being prevented from falling out in the resting position with the console walls.

The object of the invention is presented in embodiments in the drawing, in which Fig. 1 shows a release lever in the resting position in a ¾ perspective view from the bottom, Fig. 2 shows a release lever in the operating position in a ¾ perspective view from the bottom, Fig. 3 shows a release lever in a position close to the operating position in a ¾ perspective view from the bottom, Fig. 4 shows a longitudinal section through a release lever in the resting position, and Fig. 5 shows a release lever in the parachute rescue system.

A release lever 1 relates to a parachute rescue system of a light aircraft, with a jet engine mounted on the aircraft 2 fuselage. As shown in Fig. 1, Fig. 2, Fig. 3 and Fig. 4, the release lever 1 comprises a handle 7 arranged in the body mounted to the fuselage structure in the aircraft 2 cabin. The body consists of a console 4 and a rotatable lever 5 rotatably mounted in the console 4 on a rotation axis 6. The rotatable lever 5 can be tilted from the resting position, shown in Fig. 1, to the operating position, shown in Fig. 2. The console 4 has a base 8 with fixing components 9 and walls 10 perpendicular to the base 8. In the fixing components 9, there are holes for mounting the console 4 in the cabin to the aircraft 2 structure, for example by means of screws.

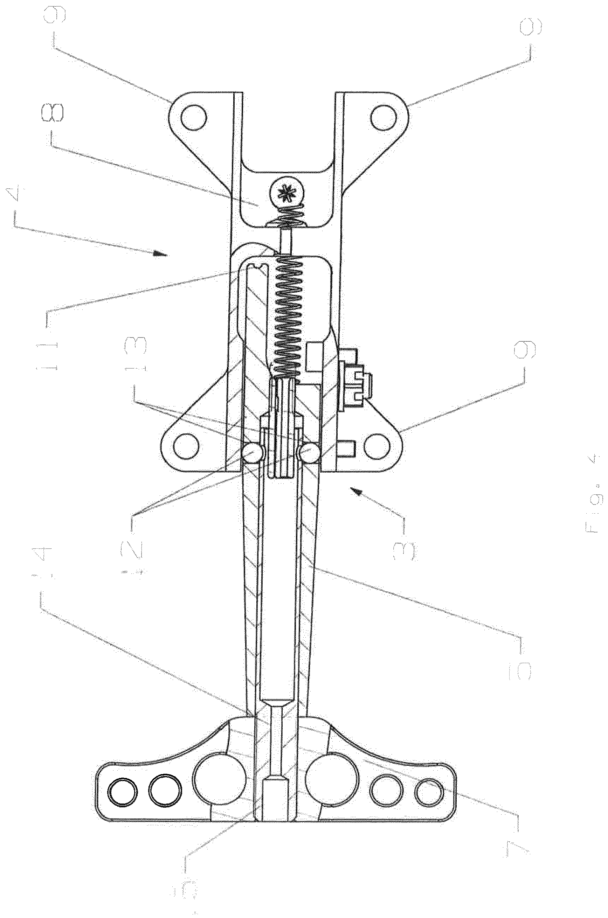

As shown in Fig. 4, the handle 7 is seated inside the rotatable lever 5 and protrudes beyond the rotatable lever 5, wherein the handle 7 is provided with a locking mechanism 3 which prevents pulling the handle 7 out of the rotatable lever 5 before it is tilted from the resting position, shown in Fig. 1, to the operating position, shown in Fig. 2. As shown in Fig. 4, in an embodiment of the invention, the locking mechanism 3 which prevents pulling the handle 7 out of the rotatable lever 5 before it is tilted from the resting position to the operating position, contains balls 12 arranged in seats 13 located in the side walls of the rotatable lever 5 and of the handle 7, the balls being prevented from falling out in the resting position with the console 4 walls 10. It is obvious that in another embodiment of the invention, the locking mechanism 3 may be used, which prevents pulling the handle 7 out of the rotatable lever 5 before it is tilted from the resting position to the operating position, having a different known structure.

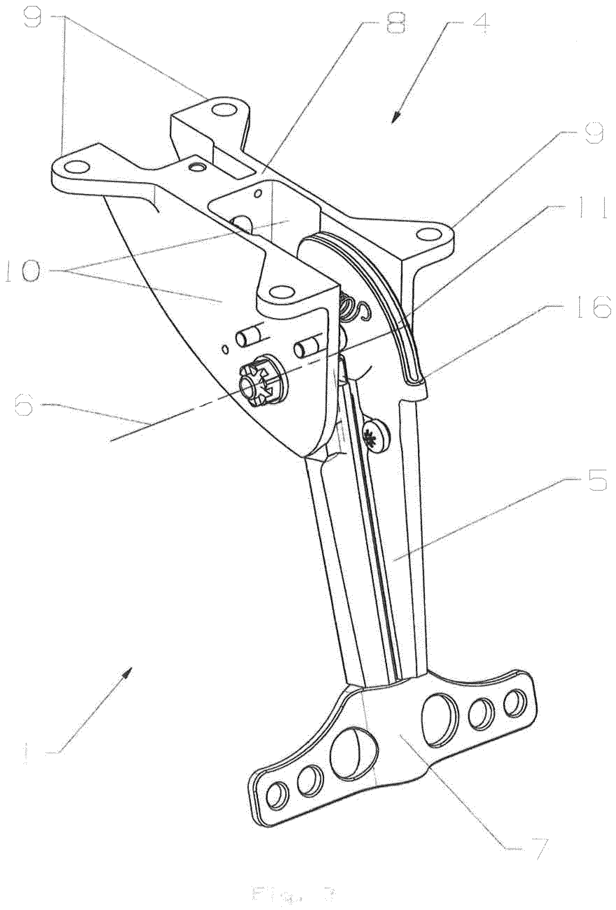

As shown in Fig. 3, the rotatable lever is provided with a guide 11 in a form of a circular sector, the guide being located at the end of the rotatable lever 5, and the end being located between the console 4 walls 10. On the ridge of the guide 11, there is a profiled groove, and on the edge of the guide 11, there is a fixing seat 16.

As shown in Fig. 4, the handle 7 has a through hole 14 extending along its axis, terminated with a seat 15 at the end of the handle 7, the seat protruding beyond the rotatable lever 5.

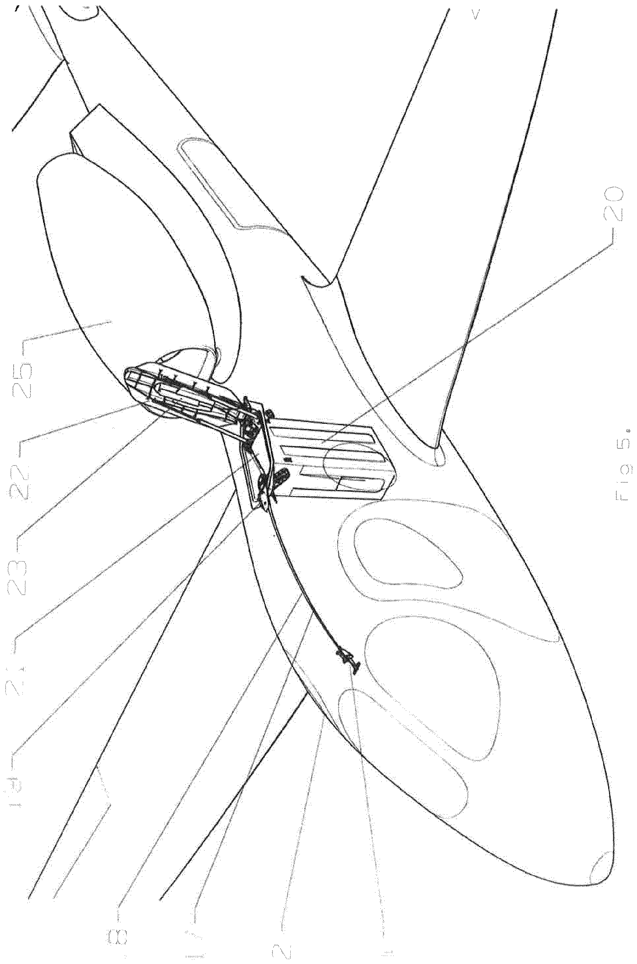

The release lever 1 is used to activate the parachute rescue system of a light aircraft 2, especially an aircraft 2 with a jet engine 25 mounted on the aircraft 2 fuselage. The location of the release lever 1 in the parachute rescue system is shown in Fig. 5. The parachute rescue system comprises a parachute 21 arranged in a container 20 provided with an openable lid 22 at the top, constituting part of the plating of the aircraft 2 fuselage. The lid 22 is closed with a lid lock 19 connected, with a lid tension member 17, to the fixing seat 16 located on the edge of the guide 11 of the release lever 1. On the lid 22, from the inner side, a dragging rocket 23 connected to the parachute canopy 21 is mounted. The parachute 21 is connected to the aircraft 2 structure. The fuse of the dragging rocket 23 is connected, through the rocket tension member 18, to the handle 7 of the release lever 1.

The container 20 with the parachute 21 is arranged in the aircraft 2 fuselage upstream of the inlet of air into the jet engine 25. The lid 22 of the container 20 is rotatably mounted on its rear edge. The distance between the rear edge of the lid 22 and the inlet of air into the jet engine 25 is smaller that the length of the lid 22 in the longitudinal direction.

The release lever 1 activates the parachute rescue system in two steps. When the operator wishes to activate the rescue system, he pulls the handle 7, thereby moving the rotatable lever 5 of the release lever 1 from the resting position, shown in Fig. 1, to the operating position, shown in Fig. 2. This movement causes pulling of the lid tension member 17 and opening of the lid lock 19 of the container 20 of the parachute 21. The container 20 for the parachute 21 is opened, and the lid 22 of the container 20 abuts against the inlet of air into the jet engine 25. In the operating position, the balls 12, arranged in the seats 13 located in the side walls of the rotatable lever 5 and of the handle 7, which are prevented from falling out in the resting position with the console 4 walls 10, fall out. Now, it is possible to pull the handle 7 out of the rotatable lever 5. One end of the rocket tension member 18 is connected to the fuse of the rocket 23, and the other end passes through the through hole 14 in the handle 7 and is mounted in the seat 15 at the end of the handle 7. Pulling the handle 7 out of the rotatable lever 5 causes launching of the dragging rocket 23. At the time of activating the parachute rescue system in the aircraft 2, the lid 22 opens towards the back of the aircraft, covering at the same time the inlet of air into the jet engine 25. Then, the dragging rocket 23 mounted on the inner side of the openable lid 22 is launched and drags the parachute canopy 21 outside of the container 20 above the surface of the aircraft 2. Covering the inlet of air into the jet engine 25 by the lid 22 assures safe removal of the parachute canopy 21 from the container 20 above the aircraft 2, which as a result allows its proper opening at the right moment.

The release lever 1 according to the invention is a solution which allows activation of the rescue system, providing a two-step action with a single lever. By means of the release lever 1 according to the invention, the lid 22 of the container 20 for the parachute 21 is opened, and then the fuse of the dragging rocket 23 is activated. The two-step action immediately takes place. The pilot uses one handle 7, the rotation of which about the axis 6 on the console 4, causes opening of the lid 22 of the container, and pulling out of the rotatable lever 5 launches the dragging rocket 23.

## Claims

1. A release lever (1), for a parachute rescue system of a light aircraft (2), said light aircraft (2) comprising a jet engine mounted on the aircraft fuselage, the release lever comprising a body and a handle (7) arranged in the body and configured to be mounted to the fuselage structure in the aircraft (2) cabin,
**characterised in that** the body consists of a console (4) and a rotatable lever (5) rotatably mounted in the console (4) and configured to be rotated from a resting position to an operating position, wherein the console (4) is mountable to the aircraft (2) fuselage structure, and the handle (7) is seated inside the rotatable lever (5) and protrudes beyond the rotatable lever (5), wherein the handle (7) is provided with a locking mechanism (3) which prevents pulling the handle (7) out of the rotatable lever (5) before it is rotated from the resting position to the operating position, and
wherein in the operating position, the locking mechanism (3) is configured to allow the operator to pull the handle (7) out of the rotatable lever (5).

2. The lever according to claim 1, **characterised in that** the console (4) has a base (8) with fixing components (9), and walls (10) perpendicular to the base (8), and the rotatable lever (5) is provided with a guide (11) in a form of a circular sector, the guide being located at the end of the rotatable lever (5), the end being located between the console (4) walls (10), wherein there is a fixing seat (16) on the edge of the guide (11), and the handle (7) has a through hole (14) extending along its axis, terminated with a seat (15) at the end of the handle (7), the seat (15) protruding beyond the rotatable lever (5).

3. The lever according to claim 1, **characterised in that** the locking mechanism (3), which prevents pulling the handle (7) out of the rotatable lever (5) before it is rotated from the resting position to the operating position, contains balls (12) arranged in seats (13) located in the side walls of the rotatable lever (5) and of the handle (7), the balls being prevented from falling out in the resting position with the console (4) walls (10).

## Patentansprüche

1. Auslösehebel (1) für ein Fallschirmrettungssystem eines Leichtflugzeugs (2), wobei das Leichtflugzeug ein am Flugzeugrumpf montiertes Düsentriebwerk umfasst, wobei der Auslösehebel einen Körper und einen Griff (7) umfasst, der im Körper angeordnet und konfiguriert ist, um an der Rumpfstruktur in der Kabine des Leichtflugzeugs (2) montiert zu werden,
**dadurch gekennzeichnet, dass** der Körper aus einer Konsole (4) und einem Drehhebel (5) besteht, der drehbar in der Konsole (4) montiert und konfiguriert ist, um aus einer Ruheposition in eine Betriebsposition gedreht zu werden, wobei die Konsole (4) an der Rumpfstruktur des Flugzeugs (2) montierbar ist und der Griff (7) innerhalb des Drehhebels (5) gelagert ist und über den Drehhebel (5) hinausragt, wobei der Griff (7) mit einem Verriegelungsmechanismus (3) versehen ist, der verhindert, dass der Griff (7) aus dem Drehhebel (5) gezogen wird, bevor er aus der Ruheposition in die Betriebsposition gedreht wird, und
wobei in der Betriebsposition der Verriegelungsmechanismus (3) konfiguriert ist, um es dem Bediener zu ermöglichen, den Griff (7) aus dem Drehhebel (5) herauszuziehen.

2. Hebel nach Anspruch 1, **dadurch gekennzeichnet, dass** die Konsole (4) eine Basis (8) mit Befestigungselementen (9) und Wände (10) senkrecht zur Basis (8) aufweist und der Drehhebel (5) mit einer Führung (11) in Form eines Kreisausschnitts versehen ist, wobei die Führung am Ende des Drehhebels (5) angebracht ist, wobei das Ende zwischen den Wänden (10) der Konsole (4) angebracht ist, wobei sich am Rand der Führung (11) ein Befestigungssitz (16) befindet und der Griff (7) ein Durchgangsloch (14) aufweist, das sich entlang seiner Achse erstreckt und mit einem Sitz (15) am Ende des Griffs (7) endet, wobei der Sitz (15) über den Drehhebel (5) hinausragt.

3. Hebel nach Anspruch 1, **dadurch gekennzeichnet, dass** der Verriegelungsmechanismus (3), der ein Herausziehen des Griffs (7) aus dem Drehhebel (5) verhindert, bevor er aus der Ruheposition in die Betriebsposition gedreht wird, Kugeln (12) enthält, die in Sitzen (13) angeordnet sind, die sich in den Seitenwänden des Drehhebels (5) und des Griffs (7) befinden, wobei es mit den Wänden (10) der Konsole (4) verhindert wird, dass die Kugeln in der Ruheposition herausfallen.

## Revendications

1. Levier de dégagement (1) pour un système de sauvetage en parachute d'un aéronef léger (2), ledit aéronef léger comprenant un moteur à réaction monté sur le fuselage de l'aéronef, le levier de dégagement comprenant un corps et une poignée (7) agencée dans le corps et configuré pour être monté sur la structure de fuselage dans la cabine de l'aéronef (2),
**caractérisé en ce que** le corps étant constitué d'une console (4) et d'un levier rotatif (5) monté à rotation dans la console (4) et configuré pour être entraîné en rotation d'une position de repos à une position de fonctionnement, la console (4) étant montable sur la structure de fuselage de l'aéronef (2) et la poignée (7) est assise à l'intérieur du levier rotatif (5) et fait une saillie au-delà du levier rotatif (5), la poignée (7) étant munie d'un mécanisme de verrouillage (3) qui empêche de tirer la poignée (7) hors du levier rotatif (5) avant de la faire tourner de la position de repos à la position de fonctionnement, et où,
dans la position de fonctionnement, le mécanisme de verrouillage (3) est configuré pour permettre à l'opérateur de tirer la poignée (7) hors du levier rotatif (5).

2. Levier selon la revendication 1, **caractérisé en ce que** la console (4) a une base (8) avec des éléments de fixation (9) et des parois (10) perpendiculaires à la base (8), et le levier rotatif (5) est muni d'un guide (11) en forme d'un secteur circulaire, le guide étant situé à l'extrémité du levier rotatif (5), l'extrémité étant située entre les parois (10) de la console (4), où il y a un siège de fixation (16) sur le bord du guide (11), et la poignée (7) a un trou traversant (14) s'étendant le long de son axe, terminé par un siège (15) à l'extrémité de la poignée (7), le siège (15) faisant saillie au-delà du levier rotatif (5).

3. Levier selon la revendication 1, **caractérisé en ce que** le mécanisme de verrouillage (3), qui empêche de tirer la poignée (7) hors du levier rotatif (5) avant qu'il ne soit tourné de la position de repos à la position de fonctionnement, contient des billes (12) agencées dans des sièges (13) situés dans les parois latérales du levier rotatif (5) et de la poignée (7), les billes étant empêchées de tomber en position de repos avec les parois (10) de la console (4).
